# EUROPÄISCHE PATENTSCHRIFT

(11) **EP 3 653 802 B1**
(45) Veröffentlichungstag und Bekanntmachung des Hinweises auf die Patenterteilung: **09.03.2022**
(21) Anmeldenummer: 19209833.3
(22) Anmeldetag: 18.11.2019
(51) Int. Cl.: E03D 13/00, E03C 1/284

(54) **URINALSIPHON**
URINAL SIPHON
SIPHON D'URINAL

(30) Priorität: 19.11.2018 DE 102018219815
(43) Veröffentlichungstag der Anmeldung: 20.05.2020
(73) Patentinhaber: Haas, Angela, 91074 Herzogenaurach (DE)
(72) Erfinder: Haas, Angela, 91074 Herzogenaurach (DE)
(74) Vertreter: FDST Patentanwälte

(56) Entgegenhaltungen:
- EP-A1- 2 412 879
- DE-A1- 2 447 695
- DE-U1- 20 105 412
- DE-U1-202010 006 979
- GB-A- 2 477 036
- US-A1- 2014 097 613

## Beschreibung

Die Erfindung betrifft einen Urinalsiphon gemäss dem Oberbegriff des Anspruchs 1 bzw. 4.

Siphons werden im Bereich von Sanitärinstallationen regelmäßig als Geruchsverschluss gegen den Austritt von Kanalgasen durch die Abwasserleitungen einer Gebäudeinstallation eingesetzt. Dazu weisen Siphons regelmäßig eine Rohrwindung auf, die im bestimmungsgemäßen Einbauzustand unterhalb einer Rohrachse eines Zulaufs und eines Ablaufs liegt. Dadurch steht in dieser Rohrwindung - umgangssprachlich auch als "Knie" bezeichnet - Flüssigkeit, die das den Siphon bildende Rohr verschließt. Dadurch können keine Kanalgase aus den Abwasserleitungen zurück in die Räume des Gebäudes entweichen.

Bei Toiletten ist häufig der Siphon in den Körper des entsprechenden Toilettenkörpers integriert. Andererseits sind auch Siphons bekannt, die dem Toilettenkörper und der Abwasserleitung zwischengeschaltet werden und die Wirkung als Geruchsverschluss nur zusammen mit der Abflussleitung des Toilettenkörpers entfalten.

Aus EP 2 412 879 A1 und DE 24 47 695 A1 sind jeweils Siphons bekannt, deren Rohrleitung spiralartig um ein Verbindungsstück zur Abflussleitung des Toilettenkörpers herum angeordnet ist. DE 20 2010 006 979 U1 und GB 2,477,036 A beschreiben Möglichkeiten, Rohrleitungen längsverschieblich zueinander aber auch sicher gegen ein Auseinanderziehen miteinander zu verbinden.

Der Erfindung liegt die Aufgabe zugrunde, einen verbesserten Siphon anzugeben.

Diese Aufgabe wird erfindungsgemäß gelöst durch einen Urinalsiphon mit den Merkmalen des Anspruchs 1 sowie durch einen Urinalsiphon mit den Merkmalen des Anspruchs 4. Vorteilhafte Ausführungsformen der Erfindung sind Gegenstand der Unteransprüche und der nachfolgenden Beschreibung.

Der erfindungsgemäße Urinalsiphon umfasst (d. h. weist auf) ein rohrförmiges Einlaufstück (bspw. eine Muffe) zum Anschluss des Urinalsiphons an eine Abflussleitung eines Urinals, sowie ein rohrförmiges Auslaufstück (oder auch: "Abflussstück") zum Anschluss des Urinalsiphons an eine Abwasserleitung. Des Weiteren umfasst der Urinalsiphon ein spiralartiges, rohrförmiges Zwischenstück, das dem Einlaufstück und dem Auslaufstück zwischengeschaltet ist und das wenigstens zwei jeweils um 180 Grad abgewinkelte (vorzugsweise gebogene) Teilabschnitte aufweist. Außerdem weist der Urinalsiphon eine Verschiebemuffe auf, mittels derer das Auslaufstück relativ zu dem Einlaufstück um eine Auszuglänge verschiebbar an dem Einlaufstück oder dem Zwischenstück befestigt ist. Ferner weist der Urinalsiphon eine Begrenzungsvorrichtung auf, mittels derer ein Verschieben des Auslaufstücks gegenüber dem Einlaufstück über die Auszuglänge hinaus unterbunden ist. Das heißt, dass die Begrenzungsvorrichtung auszugseitig die Auszuglänge begrenzt. Anders ausgedrückt ist die Begrenzungsvorrichtung dazu eingerichtet, das Verschieben des Auslaufstücks gegenüber dem Einlaufstück bis zur (insbesondere maximalen) Auszuglänge zuzulassen, darüber hinaus aber zu unterbinden, insbesondere zu blockieren.

Bevorzugt ist das Zwischenstück spritzgegossen. Beispielsweise wird dabei ein Polyethylen, optional ein vernetztes Polyethylen oder ein Polypropylen herangezogen.

Bei der Verschiebemuffe handelt es sich insbesondere um eine vergleichsweise langgestreckte Muffe, deren Rohrlänge, in die ein entsprechendes Gegenstück eingeschoben werden kann, eine Länge von wenigstens der Auszuglänge aufweist. Vorzugsweise ist die Länge der Verschiebemuffe gleich der Auszuglänge zuzüglich einer Dichtlänge, die eine Mindestüberdeckung mit dem Gegenstück für eine hinreichende Dichtheit ermöglichen soll.

Durch die Begrenzungsvorrichtung wird vorteilhafterweise verhindert, dass das Auslaufstück versehentlich soweit gegenüber dem Einlaufstück verschoben wird , dass eine Dichtwirkung verloren geht. Zudem ist aufgrund der insgesamt (wenigstens) 360 Grad überstreichenden Windungen (d. h. der wenigstens zwei abgewinkelten Teilabschnitte) ein Geruchsverschluss durch den Urinalsiphon selbst möglich.

Grundsätzlich kann das Zwischenstück als "echte" Spirale, d. h als Kurve mit stetig zunehmendem Radius (insbesondere um das Einlaufstück oder das Auslaufstück) ausgebildet sein. Vorzugsweise sind jedoch die (wenigstens zwei) vorstehend genannten abgewinkelten Teilabschnitte durch einen geradlinigen (Rohr-) Abschnitt voneinander beabstandet.

Die Begrenzungsvorrichtung ist zur Demontage des Auslaufstücks von dem Einlaufstück dauerhaft und insbesondere reversibel in einen inaktiven Zustand versetzbar. Bspw. ist dazu ein Teil der Begrenzungsvorrichtung gegenüber einem, dieses Teil haltenden Element des Urinalsiphons verschiebbar. Die Begrenzungsvorrichtung weist eine Aktivstellung und eine Inaktivstellung (in der insbesondere das verschiebbare Teil aus einem Eingriff mit einem zugehörigen Gegenstück entfernt ist) auf.

Bevorzugt ist bei bestimmungsgemäß an dem Einlaufstück oder dem Zwischenstück befestigtem Auslaufstück sowie bei aktivierter Begrenzungsvorrichtung ein Vormontagezustand des Urinalsiphons gebildet, in dem bereits das Verschieben des Auslaufstücks gegenüber dem Einlaufstück innerhalb der Auszuglänge ermöglicht, darüber hinaus aber unterbunden ist. In diesem Vormontagezustand, in dem der Urinalsiphon vorzugsweise noch nicht mit dem Urinal und/oder der Abwasserleitung verbunden ist, bilden das Einlaufstück, das Auslaufstück, das Zwischenstück sowie die Begrenzungsvorrichtung also eine Vormontageeinheit.

Die Begrenzungsvorrichtung ist außerdem durch eine zumindest im aktiven Zustand parallel zur Verschiebemuffe ausgerichtete Kulisse und einen Kulissenstift gebildet. Der Kulissenstift steht zumindest im aktiven Zustand der Begrenzungsvorrichtung mit der Kulisse in Führungsverbindung. Das heißt dass der Kulissenstift im aktiven Zustand in die Kulisse eingreift.

Die Kulisse ist dabei in einer erfindungsgemäßen Variante zwischen einer Aktivstellung und einer Inaktivstellung verschiebbar an dem Auslaufstück oder dem Einlaufstück angeordnet. In diesem Fall ist der Kulissenstift fest an dem Zwischenstück angeordnet.

Als umgekehrte Ausführung ist die Kulisse in einer ebenfalls erfindungsgemäßen Variante fest an dem Zwischenstück angeordnet und der Kulissenstift zwischen einer Aktivstellung und einer Inaktivstellung verschiebbar an dem Auslaufstück oder dem Einlaufstück angeordnet.

In einer bevorzugten Ausführung ist die Kulisse mit einem Überwurfring verbunden. Dieser Überwurfring ist im bestimmungsgemäßen Montagezustand (insbesondere verschiebbar) über das Auslaufstück oder das Einlaufstück gesteckt. Mittels dieses Überwurfrings ist die Kulisse einerseits an dem Auslaufstück bzw. dem Einlaufstück gehaltert und andererseits auch an diesem verschiebbar angeordnet.

In einer weiteren bevorzugten Ausführung ist das Einlaufstück einstückig mit dem Zwischenstück ausgebildet. Das Auslaufstück weist in diesem Fall einen einstückig rohrförmig geschlossenen Einschubabschnitt zum Einschieben in die Verschiebemuffe auf.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher erläutert. Darin zeigen:
- Fig. 1: in einer perspektivischen Explosionsdarstellung schematisch einen Urinalsiphon,
- Fig. 2: in Ansicht auf eine Rückseite eine weitere Explosionsdarstellung des Urinalsiphons,
- Fig. 3: in wiederum einer weiteren perspektivischen Explosionsdarstellung den Urinalsiphon,
- Fig. 4: in Ansicht auf eine Vorderseite eine weitere Explosionsdarstellung des Urinalsiphons,
- Fig. 5: in einer Seitenansicht eine weitere Explosionsdarstellung des Urinalsiphons,
- Fig. 6: in einer perspektivischen Ansicht den Urinalsiphon in einer kompakten Stellung,
- Fig. 7: in Ansicht auf die Rückseite den Urinalsiphon in der kompakten Stellung,
- Fig. 8 und 9: in Ansicht gemäß Fig. 6 und 7 den Urinalsiphon in einer gestreckten Stellung.

Einander entsprechende Teile und Größen sind in allen Figuren stets mit gleichen Bezugszeichen versehen.

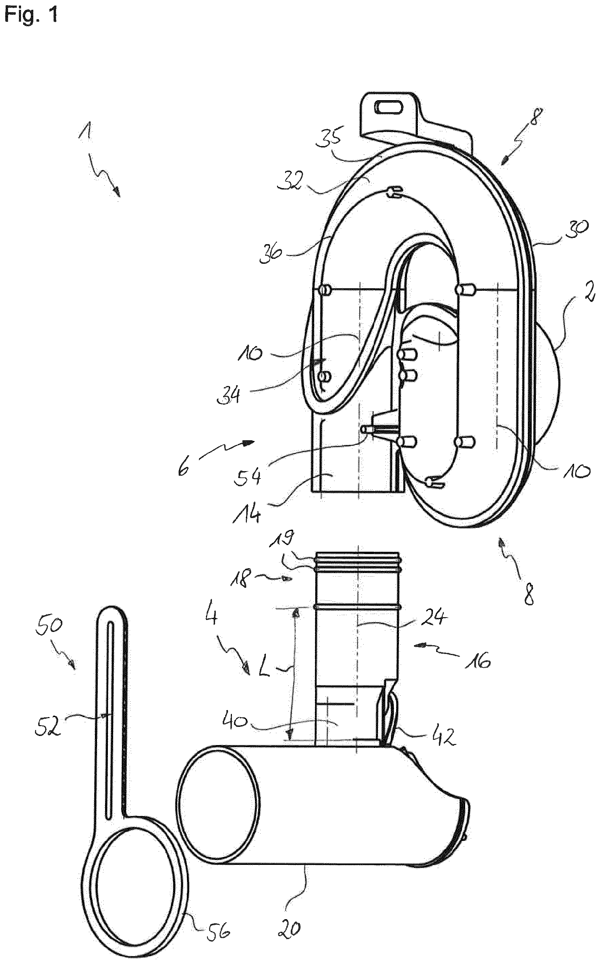

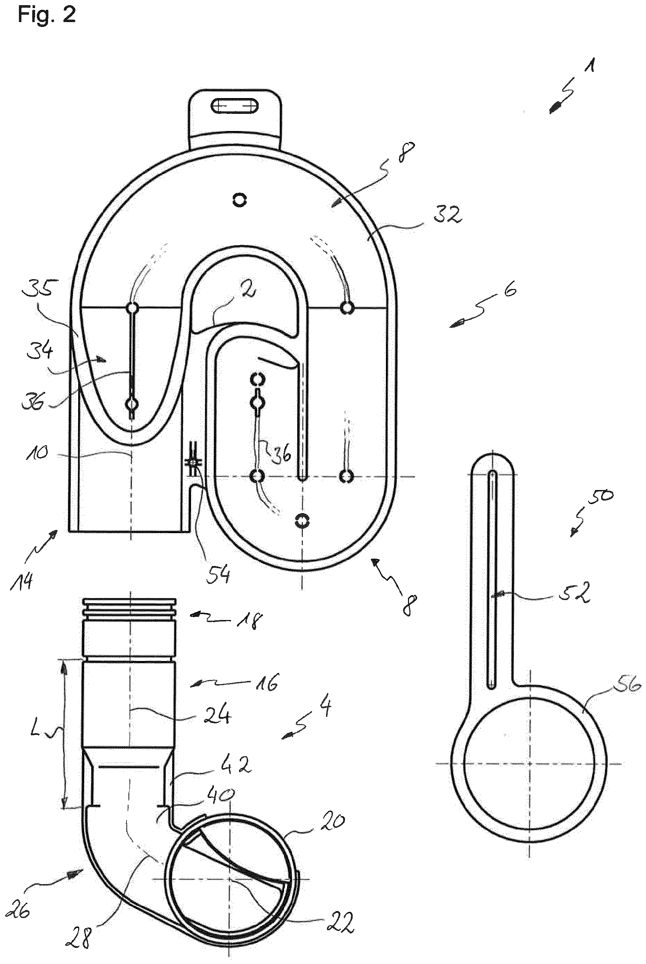

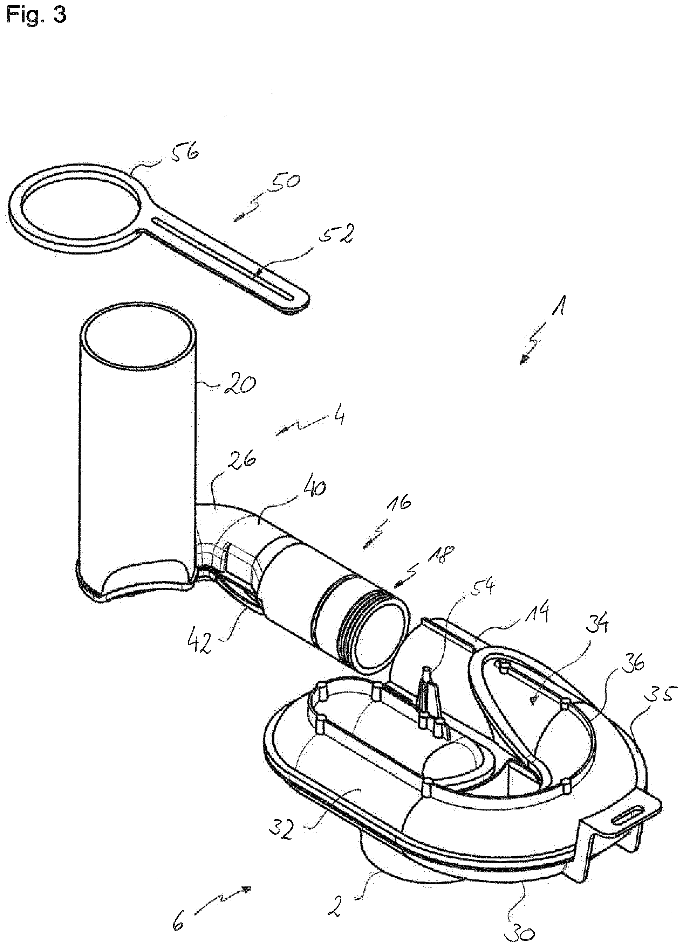

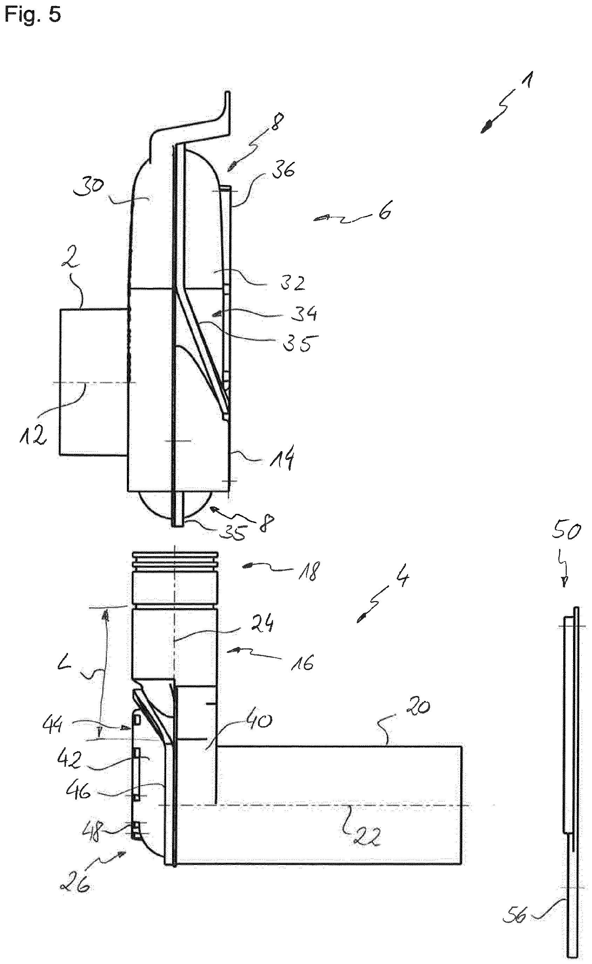

In Fig. 1 bis 5 ist ein Urinalsiphon 1 in verschiedenen perspektivischen und ebenen Ansichten jeweils als Explosionsdarstellung abgebildet. Der Urinalsiphon 1 umfasst ein rohrförmiges Einlaufstück, das konkret eine Anschlussmuffe 2 zum Anschluss des Urinalsiphons 1 an eine Abflussleitung eines Urinals bildet. Im bestimmungsgemäßen Einbauzustand des Urinalsiphons 1 ist die Abflussleitung des Urinals in diese Anschlussmuffe 2 eingesteckt. Der Urinalsiphon 1 umfasst des Weiteren ein rohrförmiges Auslaufstück 4, das zum Anschluss des Urinalsiphons 1 an eine Abwasserleitung insbesondere eines Gebäudes dient. Außerdem umfasst der Urinalsiphon 1 ein rohrförmiges Zwischenstück 6, dass sich spiralartig zwischen dem Einlaufstück (d. h. der Anschlussmuffe 2) und dem Auslaufstück 4 erstreckt. Das Zwischenstück 6 weist dabei wenigstens zwei jeweils um 180 Grad abgewinkelte Teilabschnitte 8 auf. Durch diese insgesamt um 360 Grad spiralartig gewundenen Teilabschnitte 8 kann durch den Urinalsiphon 1 alleine bereits ein wirksamer Geruchsverschluss realisiert werden, da in jeder Ausrichtung des Zwischenstücks 6 eine Art "Knie" unter einem Flüssigkeitsspiegel stehen kann.

Das Zwischenstück 6 ist mit seiner Rohrachse 10 in einer senkrecht zur Rohrachse 12 der Anschlussmuffe 2 angeordneten Ebene ausgerichtet. Die Rohrachse 12 der Anschlussmuffe 2 ist dabei im bestimmungsgemäßen Einbauzustand des Urinalsiphons 1 horizontal ausgerichtet und die Ebene der Rohrachse 10 des Zwischenstücks 6 somit in einer (zumindest bei Sanitärinstallationen aufgrund von üblichen Toleranzen näherungsweise) vertikalen Ebene angeordnet.

Um einen bauseits möglicherweise variierenden Abstand zwischen der Abflussleitung des Urinals und der Abwasserleitung ausgleichen zu können, weist der Urinalsiphon 1 eine Verschiebemuffe 14 auf. Die Verschiebemuffe 14 ist dabei durch einen einstückig und rohrförmig geschlossen ausgebildeten Teilabschnitt - der an einen der abgewinkelten Teilabschnitte 8 des Zwischenstücks 6 angrenzt - des Zwischenstücks 6 gebildet. In diese Verschiebemuffe 14 ist ein Einschubabschnitt 16 des Auslaufstücks 4 um eine Auszuglänge L variabel einsteckbar. Die maximale Auszuglänge L ist dabei kürzer bemessen als die Gesamtlänge des Einschubabschnitts 16, sodass stets ein hinreichend langer Dichtabschnitt 18, der zwei Dichtringe 19 trägt, in der Verschiebemuffe 14 verbleibt und somit eine hinreichende Dichtwirkung ermöglicht.

Das Auslaufstück 4 umfasst neben dem Einschubabschnitt 16 auslaufseitig einen Kopplungsabschnitt 20, dessen Rohrachse 22 parallel zur Rohrachse 12 der Anschlussmuffe 2 und somit auch senkrecht zu einer Rohrachse 24 des Einschubabschnitts 16 ausgerichtet ist.

Der Einschubabschnitt 16 und der Kopplungsabschnitt 20 sind dabei über einen Winkelabschnitt 26 miteinander einstückig, konkret monolithisch (d. h. aus dem gleichen Material und ohne Verbindungsnähte in vorzugsweise einem Formgebungs-, insbesondere Spritzgießschritt) verbunden. Die Rohrachse 28 des Winkelabschnitts 26 ist im bestimmungsgemäßen Montagezustand des Urinalsiphons 1 ebenfalls in der Ebene der Rohrachse 10 des Zwischenstücks 6 angeordnet. Der Winkelabschnitt 26 ist zudem derart geformt, konkret in Fortführung der Windungen des Zwischenstücks 6 gebogen, dass die Rohrachse 12 der Anschlussmuffe 2 und die Rohrachse 22 des Kopplungsabschnitts 20 im bestimmungsgemäßen Einbauzustand des Urinalsiphons 1 auf der gleichen Vertikalen liegen.

Die Anschlussmuffe 2, das Zwischenstück 6 und die Verschiebemuffe 14 bilden ein gemeinsames, integrales Bauteil des Urinalsiphons 1, das zumindest bereichsweise monolithisch in einem Spritzgießprozess aus Kunststoff, konkret einem Polyethylen, bevorzugt einem vernetzten Polyethylen urgeformt, konkret spritzgegossen ist. Da die abgewinkelten Teilabschnitte 8 des Zwischenstücks 6 insgesamt wenigstens 360 Grad überstreichen, ist eine spritzgießtechnische einstückige Fertigung des gesamten Bauteils ohne "verlorene" Formgebungsmittel (beispielsweise ausschmelzbare Kerne) nicht möglich. Deshalb ist das Zwischenstück 6 über seine beiden abgewinkelten Teilabschnitte 8 hinweg durch eine erste Rohrteilschale 30 und eine zweite Rohrteilschale 32 gebildet, die zumindest bereichsweise entlang der Rohrachse 10 der Teilabschnitte 8 aufeinander gesetzt sind. Konkret bilden die Rohrteilschalen 30 und 32 im Wesentlichen jeweils eine Halbschale des Zwischenstücks 6. Dadurch kann im Spritzgießprozess eine vergleichsweise einfache Formtrennung in der Ebene der Rohrachse 10 des Zwischenstücks 6 erfolgen.

Eine der beiden Rohrteilschalen 30 bzw. 32 weist außerdem einen umlaufenden (Rand-) Steg auf, der im bestimmungsgemäßen Montagezustand des Zwischenstücks 6 in einer komplementären Nut, die an der entsprechend anderen Rohrteilschale 32 bzw. 30 ausgebildet ist, einliegt (nicht näher dargestellt). Dieser Steg ist dabei mit seiner freien Kante mit dem Nutgrund der diesen umgreifenden Nut mittels Kunststofflaserstrahlschweißen mediendicht verbunden. Kunststofflaserstrahlschweißen hat dabei den Vorteil, dass kein oder ein im Vergleich zu anderen Schweißverfahren äußerst geringer Schmelzeaustrag aus der Schweißzone erfolgt, der ohne weiteres in der Nut aufgefangen werden kann. Somit kann eine Innenfläche des Zwischenstücks 6 möglichst glatt gehalten werden, so dass vorteilhafterweise Schlammansammlungen und/oder mikrobiologischer Aufwuchs auf unebenen Stellen der Innenfläche verhindert oder zumindest ein Risiko hierfür verringert werden. Im Vergleich zu einer Klebeverbindung hat Kunststofflaserstrahlschweißen außerdem den Vorteil einer höheren Prozesssicherheit hinsichtlich der Qualität und Dichtheit der Verbindung.

Da die Verschiebemuffe 14 - um die Dichtheit der Steckverbindung mit dem Auslaufstück 4 zu gewährleisten - durch einen umfangsseitig geschlossenen Teilabschnitt des Zwischenstücks 6 gebildet ist, weist die zweite Rohrteilschale 32 einen sich stetig verkleinernden, konkret schräg angeschnittenen Endabschnitt 34 auf. Mit diesem Endabschnitt 34 überdeckt die zweite Rohrteilschale 32 die Verschiebemuffe 14 außenseitig zu einem abnehmenden Teil. Dadurch wird ermöglicht, am Übergang der Verschiebemuffe 14 zu dem an diese angrenzenden Teilabschnitt 8 des Zwischenstücks 6 einen sprunghaften Knick, insbesondere einen 90-Grad-Knick einer Laserschweißnaht 35 zu verhindern. Durch die am Rand des Endabschnitts 34 nun schräg verlaufende Laserschweißnaht 35 kann einerseits ein Anpressdruck (oder Fügedruck), der beim Laserstrahlschweißen zwischen den beiden Rohrteilschalen 30 und 32 aufgebracht wird, auch auf die Kontaktfläche zwischen dem Endabschnitt 34 und der Verschiebemuffe 14 aufgebracht werden. Andererseits kann aber auch eine 90-Grad-Umlenkung des Laserstrahl-Fokus am Übergang zu der Verschiebemuffe 14 entfallen, sodass die Prozessführung des Kunststofflaserstrahlschweiß-Prozesses vergleichsweise einfach gehalten werden kann.

Auf der zweiten Rohrteilschale 32 ist ferner auch ein Steg 36 außenseitig aufgebracht, der eine Andruckrippe gebildet. Dieser Steg 36 stellt dabei eine Andruckfläche zum Aufbringen des Fügedrucks zwischen der ersten und der zweiten Rohrteilschale 30 bzw. 32 dar. Außerdem kann dieser Steg 36 auch als Abstandhalter zwischen dem Zwischenstück 6 und einer Installationsfläche bilden.

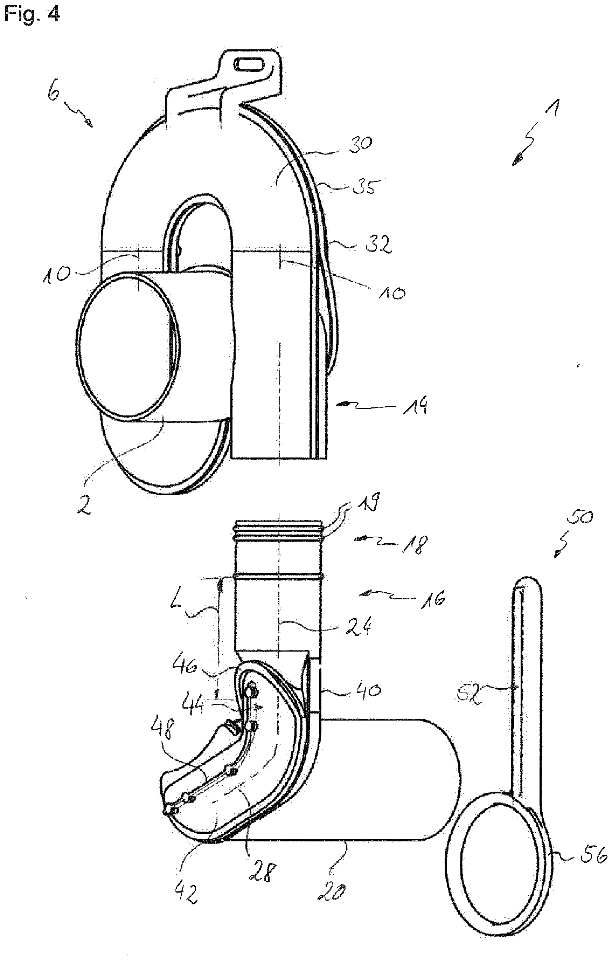

Der Winkelabschnitt 26 des Auslaufstücks 4 ist ebenfalls durch eine erste Teilschale 40 und eine zweite Teilschale 42 gebildet, die mittels Kunststofflaserstrahlschweißen analog zur ersten und zweiten Rohrteilschale 30 bzw. 32 des Zwischenstücks 6 verbunden sind. Ein entsprechender schräg angeschnittener Endabschnitt 44 der zweiten Teilschale 42 liegt dabei außenseitig auf dem Einschubabschnitt 16 auf, so dass eine die beiden Teilschalen 40 und 42 verbindende Laserschweißnaht 46 ebenfalls schräg zu einer Seite des Einschubabschnitts 16 ausläuft. Die zweite Teilschale 42 weist analog zur zweiten Rohrteilschale 32 außenseitig einen Steg 48 auf, der als Andruckrippe zum Aufbringen des Fügedrucks beim Kunststofflaserstrahlschweißen dient. Dies ist in Fig. 4 näher dargestellt.

In dem dargestellten Ausführungsbeispiel sind die erste Rohrteilschale 30 und die erste Teilschale 40 jeweils durch schwarz eingefärbtes Polyethylen gebildet. Die zweite Rohrteilschale 32 und die zweite Teilschale 42 sind dagegen aus laserstrahltransparentem Polyethylen, das im sichtbaren Spektralbereich zumindest transluzent ist, gebildet. Durch die Transluzenz im sichtbaren Spektralbereich ist eine Sichtprüfung des Urinalsiphons 1 auf Verstopfung möglich.

Um die Auszuglänge L mechanisch zu begrenzen, und somit ein unbeabsichtigtes Demontieren des Auslaufstücks 4 von dem Zwischenstück 6 zu vermeiden, weist der Urinalsiphon 1 ferner eine Begrenzungsvorrichtung 50 auf. Diese ist gebildet durch eine Kulisse 52 und einen Kulissenstift 54, der im bestimmungsgemäßen Montagezustand des Urinalsiphons 1 mit der Kulisse 52 in Führungsverbindung steht. Konkret liegt der Kulissenstift 54 dabei in der Kulisse 52, die im Wesentlichen durch einen langgestreckten, von einem Rand begrenzten Schlitz gebildet ist, ein. Die Kulisse 52 ist dabei derart bemessen, dass bei Erreichen der maximalen Auszuglänge L der Kulissenstift 54 am Ende der Kulisse 52 anliegt. In dieser Position verbleibt der Dichtungsabschnitt 18 des Einschubabschnitts 16 in der Verschiebemuffe 14. Außerdem ist die Kulisse 52 parallel zur Verschiebemuffe 14 ausgerichtet.

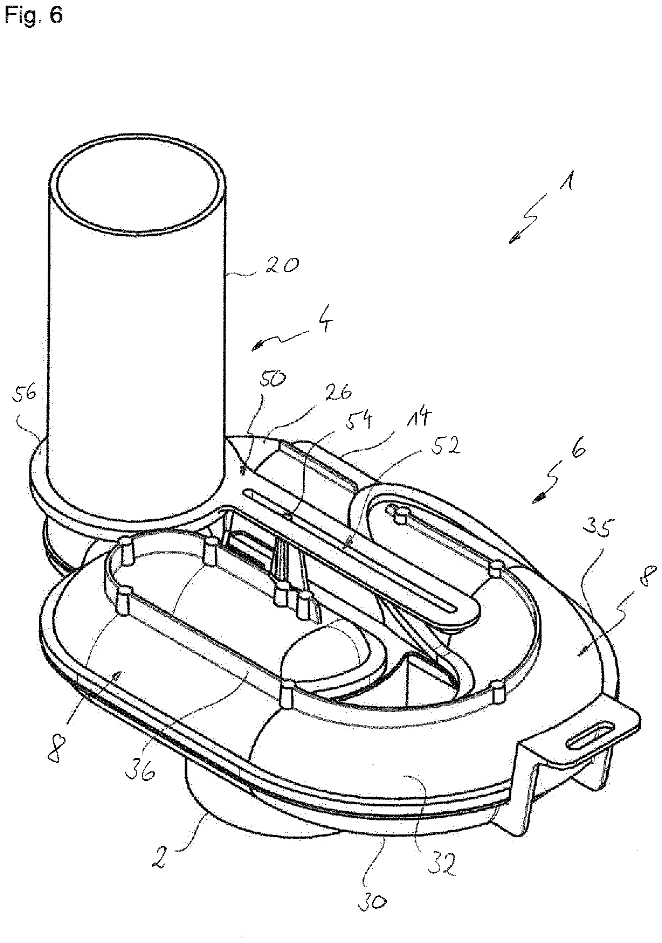

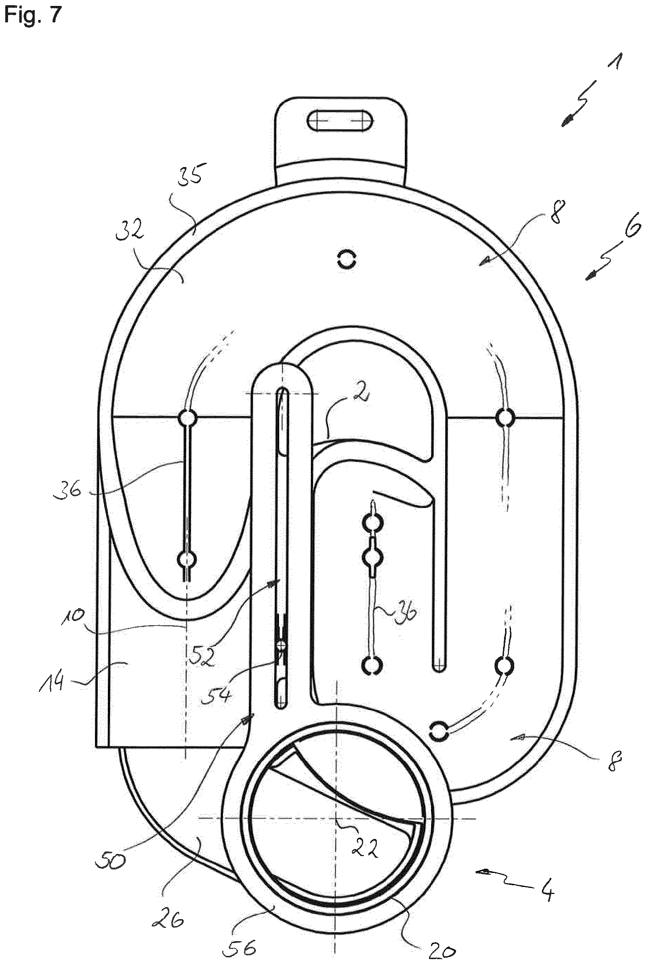

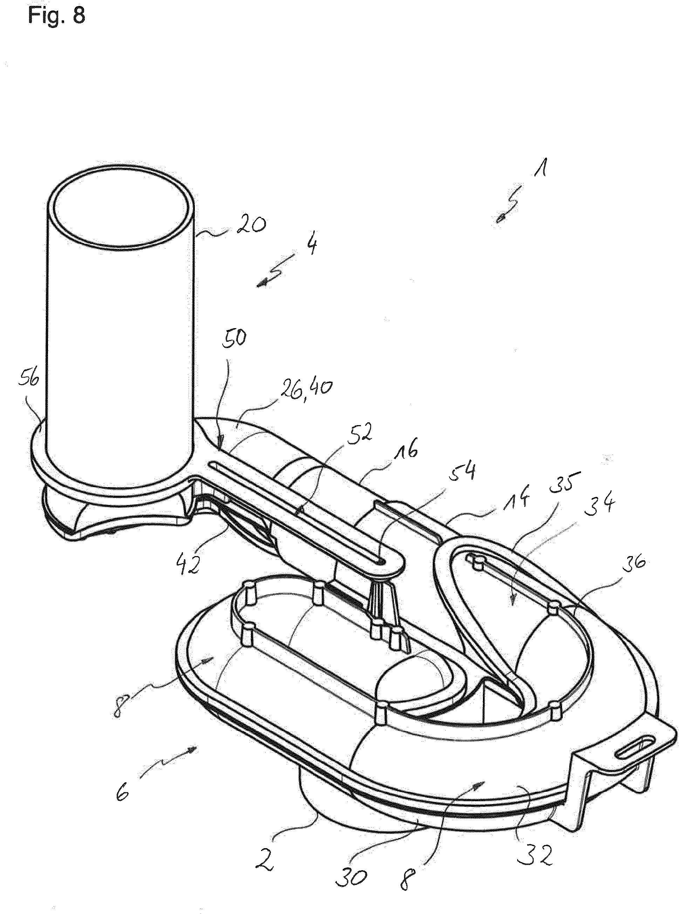

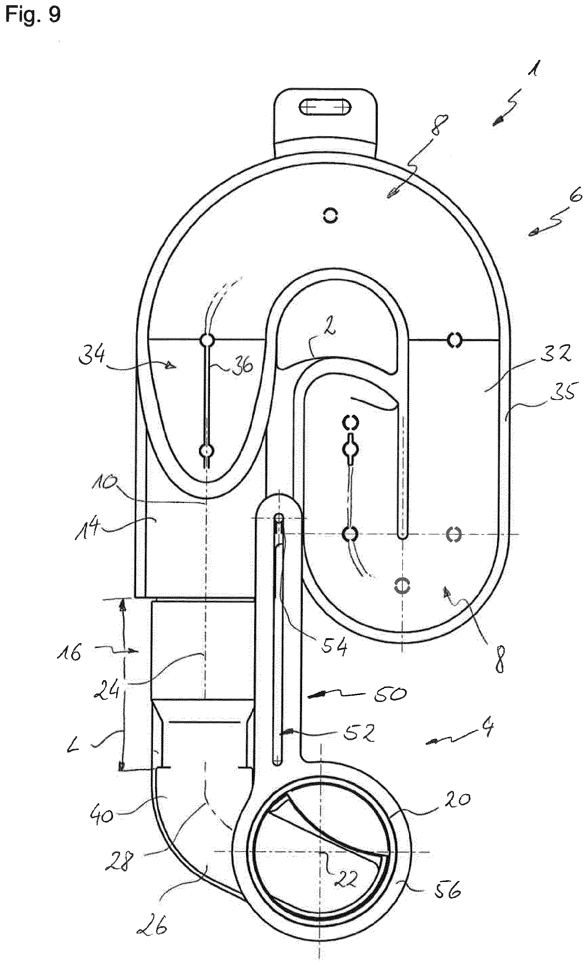

In Figur 6 und 7 ist der Urinalsiphon 1 in einem kompakten, d. h. maximal zusammen geschobenen Zustand dargestellt. In Figur 8 und 9 ist der Urinalsiphon 1 dagegen im maximal ausgezogenen Zustand dargestellt. Dabei ist zu erkennen, dass der Kulissenstift 54 am Ende der Kulisse 52 anschlägt.

Die Begrenzungsvorrichtung ist "aktivierbar". In ihrem aktiven Zustand (dargestellt in den Figuren 6 bis 9) greift der Kulissenstift 54 in die Kulisse 52 ein. In einem inaktiven Zustand (nicht näher dargestellt) ist die Kulisse 52 dagegen derart an dem Auslaufstück 4 (oder von diesem abgenommen) verschoben, dass der Kulissenstift 54 nicht mehr in die Kulisse 52 eingreifen kann. Dazu ist die Kulisse 52 mit einem Überwurfring 56 verbunden, der über den Kopplungsabschnitt 20 des Auslaufstücks 4 geschoben ist. Mithin ist das durch die Kulisse 52 und den Überwurfring 56 gebildete Bauteil separat von dem Auslaufstück 4 gefertigt, vorzugsweise spritzgegossen. Dies vereinfacht die spritzgießtechnische Herstellung des gesamten Urinalsiphons 1.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden. So können beispielsweise die Verschiebemuffe 14 und/oder das Zwischenstück 6 mit dem Auslaufstück 4 einstückig verbunden sein. In diesem Fall wäre die Anschlussmuffe 2 (gegebenenfalls gemeinsam mit dem Zwischenstück 6) in die Verschiebemuffe 14 einschiebbar. Der beanspruchte Schutzumfang ist in den nachfolgenden Ansprüchen definiert.

### Bezugszeichenliste

- 1: Urinalsiphon
- 2: Anschlussmuffe
- 4: Auslaufstück
- 6: Zwischenstück
- 8: Teilabschnitt
- 10: Rohrachse
- 12: Rohrachse
- 14: Verschiebemuffe
- 16: Einschubabschnitt
- 18: Dichtabschnitt
- 19: Dichtring
- 20: Kopplungsabschnitt
- 22: Rohrachse
- 24: Rohrachse
- 26: Winkelabschnitt
- 28: Rohrachse
- 30: Rohrteilschale
- 32: Rohrteilschale
- 34: Endabschnitt
- 35: Laserschweißnaht
- 36: Steg
- 40: Teilschale
- 42: Teilschale
- 44: Endabschnitt
- 46: Laserschweißnaht
- 48: Steg
- 50: Begrenzungsvorrichtung
- 52: Kulisse
- 54: Kulissenstift
- 56: Überwurfring
- L: Auszuglänge

## Patentansprüche

1. Urinalsiphon (1),
- mit einem rohrförmigen Einlaufstück (2) zum Anschluss des Urinalsiphons (1) an eine Abflussleitung eines Urinals,
- mit einem rohrförmigen Auslaufstück (4) zum Anschluss des Urinalsiphons (1) an eine Abwasserleitung,
- mit einem spiralartigen, rohrförmigen Zwischenstück (6), das dem Einlaufstück (2) und dem Auslaufstück (4) zwischengeschaltet ist und das wenigstens zwei jeweils um 180 Grad abgewinkelte Teilabschnitte (8) aufweist,
- mit einer Verschiebemuffe (14), mittels derer das Auslaufstück (4) relativ zu dem Einlaufstück (2) um eine Auszuglänge (L) verschiebbar an dem Einlaufstück (2) oder dem Zwischenstück (6) befestigt ist, **dadurch gekennzeichnet, dass**
der Urinalsiphon eine Begrenzungsvorrichtung (50) aufweist, mittels derer ein Verschieben des Auslaufstücks (4) gegenüber dem Einlaufstück (2) über die Auszuglänge (L) hinaus unterbunden ist,
wobei die Begrenzungsvorrichtung (50) zur Demontage des Auslaufstücks (4) von dem Einlaufstück (2) dauerhaft in einen inaktiven Zustand versetzbar ist,
wobei die Begrenzungsvorrichtung (50) durch eine zumindest im aktiven Zustand parallel zur Verschiebemuffe (14) ausgerichtete Kulisse (52) und einen Kulissenstift (54) gebildet ist, wobei der Kulissenstift (54) zumindest im aktiven Zustand der Begrenzungsvorrichtung (50) mit der Kulisse (52) in Führungsverbindung steht,
wobei die Kulisse (52) zwischen einer Aktivstellung und einer Inaktivstellung verschiebbar an dem Auslaufstück (4) oder dem Einlaufstück (2) angeordnet ist, und wobei der Kulissenstift (54) fest an dem Zwischenstück (6) angeordnet ist.

2. Urinalsiphon (1) nach Anspruch 1,
wobei die Kulisse (52) mit einem Überwurfring (56) verbunden ist, der im bestimmungsgemäßen Montagezustand über das Auslaufstück (4) oder das Einlaufstück (2) gesteckt ist.

3. Urinalsiphon (1) nach Anspruch 1 oder 2,
wobei das Einlaufstück (2) einstückig mit dem Zwischenstück (6) ausgebildet ist, und wobei das Auslaufstück (4) einen einstückig rohrförmig geschlossenen Einschubabschnitt (16) zum Einschieben in die Verschiebemuffe (14) aufweist.

4. Urinalsiphon (1),
- mit einem rohrförmigen Einlaufstück (2) zum Anschluss des Urinalsiphons (1) an eine Abflussleitung eines Urinals,
- mit einem rohrförmigen Auslaufstück (4) zum Anschluss des Urinalsiphons (1) an eine Abwasserleitung,
- mit einem spiralartigen, rohrförmigen Zwischenstück (6), das dem Einlaufstück (2) und dem Auslaufstück (4) zwischengeschaltet ist und das wenigstens zwei jeweils um 180 Grad abgewinkelte Teilabschnitte (8) aufweist,
- mit einer Verschiebemuffe (14), mittels derer das Auslaufstück (4) relativ zu dem Einlaufstück (2) um eine Auszuglänge (L) verschiebbar an dem Einlaufstück (2) oder dem Zwischenstück (6) befestigt ist, **dadurch gekennzeichnet, dass**
der Urinalsiphon eine Begrenzungsvorrichtung (50) aufweist,
mittels derer ein Verschieben des Auslaufstücks (4) gegenüber dem Einlaufstück (2) über die Auszuglänge (L) hinaus unterbunden ist,
wobei die Begrenzungsvorrichtung (50) zur Demontage des Auslaufstücks (4) von dem Einlaufstück (2) dauerhaft in einen inaktiven Zustand versetzbar ist,
wobei die Begrenzungsvorrichtung (50) durch eine zumindest im aktiven Zustand parallel zur Verschiebemuffe (14) ausgerichtete Kulisse (52) und einen Kulissenstift (54) gebildet ist, wobei der Kulissenstift (54) zumindest im aktiven Zustand der Begrenzungsvorrichtung (50) mit der Kulisse (52) in Führungsverbindung steht,
wobei die Kulisse (52) fest an dem Zwischenstück (6) angeordnet ist, und wobei der Kulissenstift (54) zwischen einer Aktivstellung und einer Inaktivstellung verschiebbar an dem Auslaufstück (4) oder dem Einlaufstück (2) angeordnet ist.

## Claims

1. Urinal siphon (1),
- with a tubular inlet piece (2) for connecting the urinal siphon (1) to a drain line of a urinal,
- with a tubular outlet piece (4) for connecting the urinal siphon (1) to a waste water line,
- with a spiral-shaped, tubular intermediate piece (6), which is interposed between the inlet piece (2) and the outlet piece (4) and which has at least two sections (8) each angled at 180 degrees,
- with a sliding sleeve (14), by means of which the outlet piece (4) is fastened to the inlet piece (2) or the intermediate piece (6) so as to be displaceable relative to the inlet piece (2) by an extension length (L),
**characterized in that**
the urinal siphon comprises a limiting device (50), by means of which a displacement of the outlet piece (4) relative to the inlet piece (2) beyond the extension length (L) is prevented,
wherein the limiting device (50) can be permanently set to an inactive state for disassembly of the outlet piece (4) from the inlet piece (2),
wherein the limiting device (50) is formed by a guide slot (52), which is aligned parallel to the sliding sleeve (14) at least in the active state, and a guide slot pin (54), wherein the guide slot pin (54) is in guiding connection with the guide slot (52) at least in the active state of the limiting device (50),
wherein the guide slot (52) is arranged on the outlet piece (4) or the inlet piece (2) so as to be displaceable between an active position and an inactive position, and wherein the guide slot pin (54) is arranged fixedly on the intermediate piece (6).

2. Urinal siphon (1) according to claim 1,
wherein the guide slot (52) is connected to a retaining ring (56), which is fitted over the outlet piece (4) or the inlet piece (2) in the intended assembled state.

3. Urinal siphon (1) according to claim 1 or 2,
wherein the inlet piece (2) is designed in one piece with the intermediate piece (6), and wherein the outlet piece (4) has an insertion section (16), which is closed in one piece in the form of a tube, for insertion into the sliding sleeve (14).

4. Urinal siphon (1),
- with a tubular inlet piece (2) for connecting the urinal siphon (1) to a discharge line of a urinal,
- with a tubular outlet piece (4) for connecting the urinal siphon (1) to a waste water line,
- with a spiral-shaped, tubular intermediate piece (6), which is interposed between the inlet piece (2) and the outlet piece (4) and which has at least two sections (8) each angled at 180 degrees,
- with a sliding sleeve (14), by means of which the outlet piece (4) is fastened to the inlet piece (2) or the intermediate piece (6) so as to be displaceable relative to the inlet piece (2) by an extension length (L),
**characterized in that**
the urinal siphon comprises a limiting device (50), by means of which a displacement of the outlet piece (4) relative to the inlet piece (2) beyond the extension length (L) is prevented,
wherein the limiting device (50) can be permanently set to an inactive state for dismounting the outlet piece (4) from the inlet piece (2),
wherein the limiting device (50) is formed by a guide slot (52), which is aligned parallel to the sliding sleeve (14) at least in the active state, and a guide slot pin (54), wherein the guide slot pin (54) is in guiding connection with the guide slot (52) at least in the active state of the limiting device (50),
wherein the guide slot (52) is arranged fixedly on the intermediate piece (6), and wherein the guide slot pin (54) is arranged on the outlet piece (4) or the inlet piece (2) so as to be displaceable between an active position and an inactive position.

## Revendications

1. Siphon urinaire (1),
- avec une pièce d'entrée tubulaire (2) pour le raccordement du siphon urinaire (1) à une conduite d'évacuation d'un urinoir,
- avec une pièce de sortie tubulaire (4) pour le raccordement du siphon urinaire (1) à une conduite d'eaux usées,
- avec une pièce intermédiaire (6) tubulaire en forme de spirale, qui est intercalée entre la pièce d'entrée (2) et la pièce de sortie (4) et qui comprend au moins deux tronçons (8) coudés chacun à 180 degrés,
- avec un manchon coulissant (14), au moyen duquel la pièce de sortie (4) est fixée à la pièce d'entrée (2) ou à la pièce intermédiaire (6) de manière à pouvoir être déplacée d'une longueur d'extension (L) par rapport à la pièce d'entrée (2),
**caractérisé en ce que**
le siphon urinaire comprend un dispositif de limitation (50), au moyen duquel un déplacement de la pièce de sortie (4) par rapport à la pièce d'entrée (2) au-delà de la longueur d'extraction (L) est empêché,
dans lequel le dispositif de limitation (50) peut être mis durablement dans un état inactif pour le démontage de la pièce de sortie (4) de la pièce d'entrée (2),
dans lequel le dispositif de limitation (50) est formé par une coulisse (52) orientée parallèlement au manchon coulissant (14) au moins à l'état actif et par une tige de coulisse (54), dans lequel la tige de coulisse (54) est en liaison de guidage avec la coulisse (52) au moins à l'état actif du dispositif de limitation (50),
dans lequel la coulisse (52) est disposée sur la pièce de sortie (4) ou la pièce d'entrée (2) de manière à pouvoir être déplacée entre une position active et une position inactive, dans lequel et la tige de coulisse (54) est disposée de manière fixe sur la pièce intermédiaire (6).

2. Siphon urinaire (1) selon la revendication 1,
dans lequel la coulisse (52) est reliée à une bague de recouvrement (56), qui, dans l'état de montage prévu, est enfilée sur la pièce de sortie (4) ou la pièce d'entrée (2).

3. Siphon urinaire (1) selon la revendication 1 ou 2,
dans lequel la pièce d'entrée (2) est réalisée d'une seule pièce avec la pièce intermédiaire (6), et dans lequel la pièce de sortie (4) comprend une section d'insertion (16) fermée en forme de tube d'une seule pièce pour l'insertion dans le manchon coulissant (14).

4. Siphon urinaire (1),
- avec une pièce d'entrée tubulaire (2) pour le raccordement du siphon urinaire (1) à une conduite d'évacuation d'un urinoir,
- avec une pièce de sortie tubulaire (4) pour le raccordement du siphon urinaire (1) à une conduite d'eaux usées,
- avec une pièce intermédiaire (6) tubulaire en forme de spirale, qui est intercalée entre la pièce d'entrée (2) et la pièce de sortie (4) et qui comprend au moins deux tronçons (8) coudés chacun à 180 degrés,
- avec un manchon coulissant (14), au moyen duquel la pièce de sortie (4) est fixée à la pièce d'entrée (2) ou à la pièce intermédiaire (6) de manière à pouvoir être déplacée d'une longueur d'extension (L) par rapport à la pièce d'entrée (2),
**caractérisé en ce que**
le siphon urinaire comprend un dispositif de limitation (50), au moyen duquel un déplacement de la pièce de sortie (4) par rapport à la pièce d'entrée (2) au-delà de la longueur d'extraction (L) est empêché,
dans lequel le dispositif de limitation (50) peut être mis durablement dans un état inactif pour le démontage de la pièce de sortie (4) de la pièce d'entrée (2),
dans lequel le dispositif de limitation (50) est formé par une coulisse (52) orientée parallèlement au manchon coulissant (14) au moins à l'état actif et par une tige de coulisse (54), dans lequel la tige de coulisse (54) est en liaison de guidage avec la coulisse (52) au moins à l'état actif du dispositif de limitation (50),
dans lequel la coulisse (52) est disposée de manière fixe sur la pièce intermédiaire (6), et la tige de coulisse (54) est disposée de manière à pouvoir être déplacée sur la pièce de sortie (4) ou la pièce d'entrée (2) entre une position active et une position inactive.
